# EUROPEAN PATENT APPLICATION

(11) **EP 4 564 890 A1**
(43) Date of publication of application: **04.06.2025**
(21) Application number: 22952365.9
(22) Date of filing: 27.07.2022
(51) Int. Cl.: H04W 24/08

(54) **MEASUREMENT REPORTING METHODS AND APPARATUSES, AND DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/108413
(87) International publication number: WO 2024/020903

(57) **Abstract**

Provided in the present disclosure are measurement reporting methods and apparatuses, and a device and a storage medium. A method comprises: determining at least one mapping relationship, wherein the mapping relationship comprises a mapping relationship between measurement information of an application-layer service of a terminal device and an indication index; respectively mapping and converting at least one type of measurement information of the current application-layer service of the terminal device into a corresponding indication index on the basis of the mapping relationship; and reporting a measurement report to a base station, wherein the measurement report indicates the indication indexes respectively corresponding to the at least one type of measurement information. The method in the present disclosure effectively reduces a reporting delay, speeds up the reporting of measurement information of a real-time application-layer service, and makes it possible for a base station to dynamically schedule and allocate radio resources on the basis of the measurement information of the real-time application-layer service, such that the user experience can be improved, the utilization rate of air interface resources can be increased, and the system capacity can be increased. Moreover, the present disclosure also simplifies the amount of data reported and can avoid the reporting of unnecessary measurement information, thereby reducing air interface signaling overheads.

## Description

### TECHNICAL FIELD

The present disclosure relates to the field of communication technology, and specifically to a measurement reporting method and apparatus, a device, and a storage medium.

### BACKGROUND

In communication systems, networks usually provide users with extended reality (XR) services and cloud gaming (CG) services. Since the XR services and the CG services have certain diversity and data stream (i.e., video) characteristics, "instant" changes may occur when the XR services or the CG services are performed. In this case, the base station needs to be able to sense application layer data information of the XR services or the CG services, and timely adjust resources of the base station (for example, scheduling resources) based on the application layer data information, to improve user experience, improve capacity of the XR services and the CG services supported by the communication system, and to reduce power consumption of terminals.

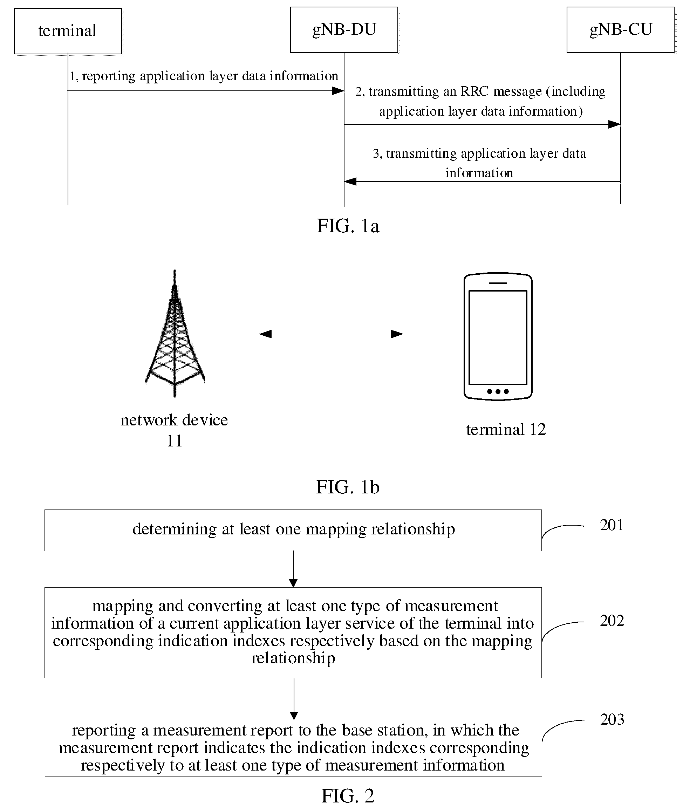

In related technologies, a main method for the base station to sense the application layer data information of the XR services or the CG services includes: the terminal directly and explicitly reporting the application layer data information of its video services to the base station through higher-layer signaling. Moreover, when the base station has a centralized unit (CU)-distributed unit (DU) splitting architecture, FIG. 1a is a flowchart of a method for the base station to obtain the application layer data information provided by an embodiment of the present disclosure. As shown in FIG. 1a, the terminal will first transparently transmit the application layer data information to the CU through the DU (i.e. steps 1 and 2 in FIG. 1a), and then the CU will forward the received application layer data information to the DU (i.e. step 3 in FIG. 1a), so that DU schedules resources based on the application layer data information.

In related technologies, the method for the base station to sense the application layer data information has a high latency, which will lead to scheduling delays and inaccuracies in the base station. If the XR services or the CG services also use the same sensing mode as the video service application layer data, the user experience of the XR services or the CG services will be affected, thus reducing the capacity of the XR services or the CG services.

### SUMMARY

Embodiments of the present disclosure provide a measurement reporting method and apparatus, a device and a storage medium, to solve the technical problem of high latency in the related technologies.

According to a first aspect of the embodiments of the present disclosure, a measurement reporting method is provided, performed by a terminal, including: determining at least one mapping relationship, in which the mapping relationship includes a mapping relationship between measurement information of application layer services of the terminal and indication indexes; mapping and converting at least one type of measurement information of a current application layer service of the terminal into corresponding indication indexes respectively based on the mapping relationship; and reporting a measurement report to a base station, in which the measurement report indicates the indication indexes corresponding respectively to the at least one type of measurement information.

In the present disclosure, a measurement reporting method is proposed. The terminal may determine at least one mapping relationship. The mapping relationship includes a mapping relationship between measurement information of application layer services of the terminal and indication indexes. Then, the terminal may map and convert at least one type of measurement information of a current application layer service of the terminal into corresponding indication indexes based on the mapping relationship, and reports a measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends indication indexes for indicating the at least one type of measurement information to the base station. The data amount occupied by the indication indexes is much smaller than that occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

According to a second aspect of the embodiments of the present disclosure, a measurement reporting method is provided, performed by a network device, including: sending at least one mapping relationship to a terminal, in which the mapping relationship includes a mapping relationship between measurement information of application layer services of the terminal and indication indexes; receiving a measurement report from the terminal, in which the measurement report indicates indication indexes corresponding respectively to at least one type of measurement information; and scheduling resources for the terminal based on the measurement report and/or the at least one mapping relationship.

According to a third aspect of the embodiments of the present disclosure, a communication apparatus is provided. The communication apparatus is configured in a terminal. The communication apparatus may include a processing module, configured to determine at least one mapping relationship, in which the mapping relationship comprises a mapping relationship between measurement information of application layer services of the terminal and indication indexes, map and convert at least one type of measurement information of a current application layer service of the terminal into corresponding indication indexes respectively based on the mapping relationship; and a transceiver module, configured to report a measurement report to a base station, in which the measurement report indicates the indication indexes corresponding respectively to the at least one type of measurement information.

According to a fourth aspect of the embodiments of the present disclosure, a communication apparatus is provided. The communication apparatus is configured in a network device. The communication apparatus may include a transceiver module, configured to send at least one mapping relationship to a terminal, wherein the mapping relationship comprises a mapping relationship between measurement information of application layer services of the terminal and indication indexes, and receive a measurement report from the terminal, wherein the measurement report indicates indication indexes corresponding respectively to at least one type of measurement information; and a processing module, configured to schedule resources for the terminal based on the measurement report and/or the at least one mapping relationship.

According to a fifth aspect of the embodiments of the present disclosure, a communication apparatus including a processor is provided. When a computer program in a memory is called by the processor, the method described in the first aspect is implemented.

According to a sixth aspect of the embodiments of the present disclosure, a communication apparatus including a processor is provided. When a computer program in a memory is called by the processor, the method described in the second aspect is implemented.

According to a seventh aspect of the embodiments of the present disclosure, a communication apparatus including a processor and a memory for storing a computer program is provided. When the computer program stored in a memory is executed by the processor, the communication apparatus is caused to implement the method described in the first aspect.

According to an eighth aspect of the embodiments of the present disclosure, a communication apparatus including a processor and a memory for storing a computer program is provided. When the computer program stored in a memory is executed by the processor, the communication apparatus is caused to implement the method described in the second aspect.

According to a ninth aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the first aspect.

According to a tenth aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the second aspect.

According to an eleventh aspect of the embodiments of the present disclosure, a communication system is provided, in which the system includes the communication apparatus described in the third aspect and the communication apparatus described in the fourth aspect, or the communication apparatus described in the fifth aspect and the communication apparatus described in the sixth aspect, or the communication apparatus described in the seventh aspect and the communication apparatus described in the eighth aspect, or the communication apparatus described in the ninth aspect and the communication apparatus described in the tenth aspect.

According to a twelfth aspect of the embodiments of the present disclosure, a computer-readable storage medium for storing instructions used by the network device and/or the terminal is provided. When the instructions are executed, the network device is caused to implement the method described in the first aspect and/or the terminal is caused to implement the method described in the second aspect.

According to a thirteenth aspect of the embodiments of the present disclosure, a computer program product including a computer program is provided. When the computer program is running on a computer, the computer is caused to perform the method described in any of the first aspect or the second aspect.

According to a fourteenth aspect of the embodiments of the present disclosure, a chip system is provided, including at least one processor and an interface configured to support the network device to perform the functions in the first aspect and/or support the terminal to perform the functions in the second aspect, for example, at least one of determining or processing data and information in the above method. In one possible design, the chip system also includes a memory for saving a computer program and data necessary for the terminal. The chip system may include a chip, or a chip and other discrete devices.

According to a fifteenth aspect of the embodiments of the present disclosure, a computer program is provided. When the computer program is running on a computer, the computer is caused to implement the method described in any of the first aspect or the second aspect.

### BRIEF DESCRIPTION OF THE DRAWINGS

The above and/or additional aspects and advantages of the present disclosure will become apparent and readily understood from the following description of the embodiments in conjunction with the accompanying drawings, in which:
FIG. 1a is a flowchart of a method for a base station to obtain application layer data information according to an embodiment of the present disclosure;
FIG. 1b is a schematic diagram of a communication system according to an embodiment of the present disclosure;
FIG. 2 is a flowchart of a measurement reporting method based on a multi-panel transmission according to another embodiment of the present disclosure.
FIGS. 3a-3b are flowcharts of a measurement reporting method based on a multi-panel transmission according to another embodiment of the present disclosure.
FIG. 4 is a flowchart of a measurement reporting method based on a multi-panel transmission according to another embodiment of the present disclosure.
FIGS. 5a-5g are flowcharts of a measurement reporting method based on a multi-panel transmission according to another embodiment of the present disclosure.
FIG. 6 is a flowchart of a measurement reporting method based on a multi-panel transmission according to another embodiment of the present disclosure.
FIGS. 7a-7b are flowcharts of a measurement reporting method based on a multi-panel transmission according to another embodiment of the present disclosure.
FIG. 8 is a flowchart of a measurement reporting method based on a multi-panel transmission according to another embodiment of the present disclosure.
FIG. 9 is a flowchart of a measurement reporting method based on a multi-panel transmission according to another embodiment of the present disclosure.
FIG. 10 is a flowchart of a measurement reporting method based on a multi-panel transmission according to another embodiment of the present disclosure.
FIG. 11 is a flowchart of a measurement reporting method based on a multi-panel transmission according to another embodiment of the present disclosure.
FIG. 12 is a flowchart of a measurement reporting method based on a multi-panel transmission according to another embodiment of the present disclosure.
FIGS. 13a-13e are flowcharts of a measurement reporting method based on a multi-panel transmission according to another embodiment of the present disclosure.
FIG. 14 is a block diagram of a communication apparatus according to an embodiment of the present disclosure.
FIG. 15 is a block diagram of a communication apparatus according to another embodiment of the present disclosure.
FIG. 16 is a block diagram of a communication apparatus according to an embodiment of the present disclosure.
FIG. 17 is a block diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first message may also be referred to as the second information, and likewise the second information may be referred to as the first message. Depending on the context, the words "if" and "in a case" used here may be interpreted as "when" or "in response to determining".

Embodiments of the present disclosure are described in detail below, examples of which are illustrated in the accompanying drawings, in which the same or similar reference numerals refer to the same or similar elements throughout. The embodiments described below with reference to the accompanying drawings are exemplary and intended to explain the present disclosure, but do not constitute limitations on the present disclosure.

For ease of understanding, the terms involved in the disclosure are introduced firstly.

### 1. Application layer

Application layer is the top layer of the transmission control protocol (TCP) structure and the layer closest to software. It has little relationship with hardware, composition, and structure of the computer. It mainly solves application problems.

In order to better understand the method for determining a sidelink duration in the embodiments of the present disclosure, a communication system to which the embodiments of the present disclosure are applicable is firstly described as follows.

Please refer to FIG. 1b, which is a schematic diagram of a communication system according to an embodiment of the present disclosure. The communication system may include, but is not limited to, one network device, one relay device and one terminal. The number and form of devices shown in FIG. 1b are only shown as an example, and do not constitute a limitation on the embodiments of the present disclosure. The communication system may include two or more network devices and two or more terminals in a practical application. The communication system in FIG. 1b including one network device 11 and one terminal 12 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

The network device 11 in the embodiments of the present disclosure is an entity on the network side for sending or receiving signals. For example, the network device 11may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU. In the present disclosure, the TRP may be replaced with a remote radio head, or an antenna panel, or the like.

The terminal 12 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in autonomous driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

Further, in the embodiments of the present disclosure, the mentioned "obtaining from" or "obtaining... sent by" can be understood as "receiving... from" or "receiving...sent by".

Moreover, in the embodiments of the present disclosure, the meaning of "based on" can be understood as "according to" or "considering".

A measurement reporting method and apparatus, a device and a storage medium provided by the embodiments of the present disclosure will be described in detail below with reference to the accompanying drawings.

Referring to FIG. 2, FIG. 2 is a flowchart of a measurement reporting method according to an embodiment of the present disclosure. The method is performed by a terminal. As illustrated in FIG. 2, the method may include, but not limited to, the following steps.

At step 201, at least one mapping relationship is determined.

In an embodiment of the present disclosure, the mapping relationship includes a mapping relationship between measurement information of application layer services of the terminal and indication indexes.

In an embodiment of the present disclosure, the above-mentioned measurement information of the application layer services may be obtained by the terminal measuring certain application layer service data of services performed by its application layer. The measurement information of the application layer service mainly reflects a real-time situation or a current situation in a short time period of the application layer service.

Specifically, in an embodiment of the present disclosure, the measurement information of an application layer service may include at least one type of the followings.

First-type measurement information related to a latency, the first-type measurement information related to a latency can be a specific measurement value related to the latency. For example, the first-type measurement information related to the latency can include a handover latency, a processing latency, etc. For example, when the application layer service is a video stream service, the first-type measurement information can be, for example, a comparable quality viewport switching latency, an initial playout delay.

Second-type measurement information related to a buffer, the second-type measurement information related to a buffer can be a specific measurement value related to the buffer. For example, the second-type measurement information related to the buffer can be a buffer level, for example, when the application layer service is a video stream service, the second-type measurement information may be, for example, a buffer length of a video.

Third-type measurement information related to an event in an execution process of the application layer service. The event is specifically an event that will occur during the execution process of the application layer service. For example, the event can be a freeze event, a viewpoint switch event, etc. The third-type measurement information is specifically used to indicate a certain event.

Fourth-type measurement information for indicating a cause that at least one metric exceeds a predetermined threshold. When at least one metric exceeds the predetermined threshold, it means that a certain indicator of the current application layer service is deteriorated. Therefore, it is necessary to indicate the cause of deterioration of the indicator. For example, the cause that the comparable quality viewport switching latency exceeds a latency threshold may be: timeout, cache overflow, the comparable quality being available, or due to segmentation, etc. Based on this, when the comparable quality viewport switching latency exceeds the latency threshold, the terminal needs to determine the specific cause that the comparable quality viewport switching latency exceeds the latency threshold, and indicate the specific cause through the fourth-type measurement information. For example, when it is determined that the specific cause that the comparable quality viewport switching latency exceeds the latency threshold is cache overflow, then the fourth-type measurement information used to indicate "cache overflow" is determined.

Fifth-type measurement information for indicating a quality of experience (QoE) value of the application layer service. The fifth-type measurement information may be a specific measurement value used to indicate the QoE value of the application layer service. The QoE value may be generated based on a predefined function of the network or protocol and measurement information of the application layer service, and may be, for example, a mean opinion score (MOS) value.

Sixth-type measurement information for indicating a latency jitter of a received packet of an application layer. The latency jitter of the received packet may specifically refer to a latency deviation of the received packet, and the sixth-type measurement information may be a specific measurement value used to indicate the latency jitter of the received packet of the application layer.

Based on the above content, when the measurement information of application layer service includes at least one type described above, in an embodiment of the present disclosure, the at least one mapping relationship may include at least one of the followings.

At least one first-type mapping relationship for indicating a mapping relationship between the first-type measurement information and indication indexes. Based on the fact that the first-type measurement information mainly includes specific measurement values related to latencies, the first-type mapping relationship may mainly include a mapping relationship between different latency-related measurement value ranges and different indication indexes. In an embodiment of the present disclosure, since the latency conditions of different types of application layer services are different, in an embodiment of the present disclosure, different first-type mapping relationships may be applicable to different types of application layer services, or in another embodiment of the present disclosure, one first-type mapping relationship is applicable to all types of application layer services.

At least one second-type mapping relationship for indicating a mapping relationship between the second-type measurement information and indication indexes. Based on the fact that the second-type measurement information mainly includes specific measurement values related to buffers, the second-type mapping relationship may mainly include a mapping relationship between different buffer-related measurement value ranges and different indication indexes. In an embodiment of the present disclosure, since the buffer conditions of different types of application layer services are different, in an embodiment of the present disclosure, different second-type mapping relationships are applicable to different types of application layer services, or in another embodiment of the present disclosure, one second-type mapping relationship is applicable to all types of application layer services.

At least one third-type mapping relationship for indicating a mapping relationship between the third-type measurement information and indication indexes. Different third-type mapping relationships are applicable to different types of application layer services, or one third-type mapping relationship is applicable to all types of application layer services.

At least one fourth-type mapping relationship for indicating a mapping relationship between the fourth-type measurement information and indication indexes. Different fourth-type mapping relationships are applicable to different types of application layer services, or one fourth-type mapping relationship is applicable to all types of application layer services.

At least one fifth-type mapping relationship for indicating a mapping relationship between the fifth-type measurement information and indication indexes. Based on the fact that the fifth-type measurement information mainly indicates specific measurement values of the QoE values of application layer services, the fifth-type mapping relationship may mainly include a mapping relationship between different QoE value ranges and different indication indexes. In an embodiment of the present disclosure, since the QoE values of different types of application layer services are different, in an embodiment of the present disclosure, different fifth-type mapping relationships are applicable to different types of application layer services, or in another embodiment of the present disclosure, one fifth-type mapping relationship is applicable to all types of application layer services.

At least one sixth-type mapping relationship for indicating a mapping relationship between the sixth-type measurement information and indication indexes. Based on the fact that the sixth-type measurement information mainly indicates specific measurement values of latency jitters of received packets of the application layer, the sixth-type mapping relationship may mainly include a mapping relationship between different measurement value ranges of latency jitters of received packets and different indication indexes. In an embodiment of the present disclosure, since the latency jitters of received packets of different types of application layer services are different, different sixth-type mapping relationships are applicable to different types of application layer services, or in another embodiment of the present disclosure, one sixth-type mapping relationship is applicable to all types of application layer services.

Moreover, in an embodiment of the present disclosure, the above-mentioned different types of mapping relationships may be embodied in different mapping lists. Each list may include one or more measurement information of application layer services and indication indexes that are in one-to-one correspondence.

Further, in an embodiment of the present disclosure, the method for the terminal to determine the at least one mapping relationship may include at least one of the followings:
determining the at least one mapping relationship based on a protocol agreement; or
determining the at least one mapping relationship based on an indication from the base station.

In an embodiment of the present disclosure, the terminal may receive the at least one mapping relationship sent by the base station by receiving a radio resource control (RRC) message sent by the base station. The RRC message may specifically include system information and/or an RRC reconfiguration message (such as an RRC Reconfiguration message).

In an embodiment of the present disclosure, specifically an access stratum (AS) of the terminal determines and stores the at least one mapping relationship.

At step 202, at least one type of measurement information of a current application layer service of the terminal is mapped and converted into corresponding indication indexes respectively based on the mapping relationship.

In an embodiment of the present disclosure, the method of respectively mapping and converting the at least one type of measurement information of the current application layer service of the terminal into the corresponding indication indexes based on the mapping relationship may include the following steps.

In a first step, the terminal determines the at least one type of measurement information of the current application layer service.

Specifically, the at least one type of measurement information of the current application layer service is mainly determined through measurement by the application layer of the terminal. The at least one type of measurement information may include any one or more of the above-mentioned first-type measurement information to the sixth-type measurement information.

In a second step, each type of measurement information of the current application layer service is mapped and converted into a corresponding indication index based on each type of mapping relationship.

Since the at least one mapping relationship is stored in the AS of the terminal, and the at least one type of measurement information of the current application layer service is stored in the application layer of the terminal, in an embodiment of the present disclosure, the AS of the terminal can first send the at least one mapping relationship to the application layer of the terminal, and the application of the terminal performs the step of converting the measurement information into the indication index, and sending the obtained indication index corresponding to the at least one type of measurement information to the AS of the terminal; or, in another embodiment of the present disclosure, the application of the terminal may first send the at least one type of measurement information obtained through measurement to the AS of the terminal, and the AS of the terminal maps and converts the at least one type of measurement information into a corresponding indication index based on the at least one mapping relationship.

In an embodiment of the present disclosure, the above-mentioned method of mapping and converting the at least one type of measurement information into a corresponding indication index specifically includes: first determining the at least one mapping relationship that are applicable to the current application layer service and corresponding to various types of measurement information of the current application layer service, and then determining indication indexes corresponding respectively to the at least one type of measurement information of the current application layer service based on the determined at least one mapping relationship.

For example, the first-type measurement information is taken as an example for explanation. Assume that the at least one mapping relationship includes three first-type mapping relationships, namely: first-type mapping relationship #1, first-type mapping relationship #2, and first-type mapping relationship #3, in which the first-type mapping relationship #1 is applicable to the virtual reality (VR) service, the first-type mapping relationship #2 is applicable to the augmented reality (AR) service, and the first-type mapping relationship #3 is applicable to the configure grant (CG) service. In this case, if the current application layer service of the terminal is the VR service, the terminal can determine the indication index corresponding to the first-type measurement information of the current application layer service based on the first-type mapping relationship #1. Assume that the first-type mapping relationship #1 includes: the corresponding indication index being 1 when a value range of the first-type measurement information is [0,2), and the corresponding indication index being 2 when the value range of the first-type measurement information is [2,4), and the corresponding indication index being 3 when the value range of the first-type measurement information is [4,6). In this case, if the value of the first-type measurement information measured by the application layer of the terminal for the current application layer service is 1, it can be determined that the indication index corresponding to the first-type measurement information measured for the current application layer service is "1".

In addition, it should be noted that in an embodiment of the present disclosure, for each type of measurement information, different values of measurement information correspond to different indication indexes. Therefore, the indication indexes corresponding to the at least one type of measurement information of the current application layer service determined by the terminal may be specifically used to reflect the level or quality of the current application layer service.

Specifically, the indication index corresponding to the at least one type of measurement information of the current application layer service may include at least one of the followings.

The first indication index corresponding to the first-type measurement information of the current application layer service. The first indication index can be used to indicate a level or quality of a latency of the current application layer service.

The second indication index corresponding to the second-type measurement information of the current application layer service. The second indication index can be used to indicate a level or quality of a buffer of the current application layer service.

The third indication index corresponding to the third-type measurement information of the current application layer service. The third indication index can be used to indicate a specific event occurring in the current application layer service.

The fourth indication index corresponding to the fourth-type measurement information of the current application layer service. The fourth indication index can be used to indicate a cause of deterioration of an indicator in the current application layer service.

The fifth indication index corresponding to the fifth-type measurement information of the current application layer service. The fifth indication index can be used to indicate a level or quality of a QoE of the current application layer service.

The sixth indication index corresponding to the sixth-type measurement information of the current application layer service. The sixth indication index can be used to indicate a level or degree of a latency jitter of a received packet of the current application layer service.

At step 203, a measurement report is reported to the base station. The measurement report indicates the indication indexes corresponding respectively to at least one type of measurement information.

In an embodiment of the present disclosure, the measurement report includes third indication information for indicating the indication indexes corresponding respectively to at least one type of measurement information. The third indication information may be an N-bit indication code, where N is a positive integer. Different indication codes are used to indicate different indication indexes. For example, assume that the third indication information can be a 2-bit indication code, in which the indication code 00 can be used to indicate "indication index 1", the indication code 11 can be used to indicate "indication index 4"; or the indication code 00 can be used to indicate " indication index 4", and the indication code 11 can be used to indicate " indication index 1".

Further, in an embodiment of the present disclosure, it is mainly the AS of the terminal that reports the measurement report to the base station. The method for the terminal to report the measurement report to the base station may include at least one of the followings
The measurement report is reported to the base station through physical layer signaling. For example, the measurement report can be reported on a physical uplink control channel (PUCCH) and/or a random access channel (RACH).

The measurement report is reported to the base station through media access control-control element (MAC CE) signaling.

The measurement report is reported to the base station through a radio link control (RLC) protocol status report.

The measurement report is reported to the base station through radio resource control (RRC) signaling.

In some embodiments, when transmitting the RRC signaling of the measurement report, a higher priority signaling radio bearer (SRB), such as SRB1 and SRB2, may be used, so that the measurement report can be transmitted faster to the base station.

Therefore, in an embodiment of the present disclosure, the terminal reports the measurement report to the base station, and the measurement report indicates the indication indexes corresponding respectively to the at least one type of measurement information, so that the base station can determine the indication indexes corresponding respectively to the at least one type of measurement information of the current application layer service of the terminal based on the measurement report, and further determine the real-time situation of the current application layer service of the terminal, and timely schedule resources for the terminal based on the real-time service of the current application layer service ,to achieve "the purpose of improving user experience, increasing service capacity, and reducing power consumption of terminal".

In the embodiments of the present disclosure, what the terminal reports to the base station is not detailed explicit data of the measurement information of the application layer service, but the indication indexes corresponding respectively to at least one type of measurement information. Since the data amount occupied by the indication indexes is much smaller than the data amount occupied by the specific data of the measurement information, the data amount required to be reported by the terminal in the present disclosure is smaller, thereby reducing overhead of air interface signaling.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

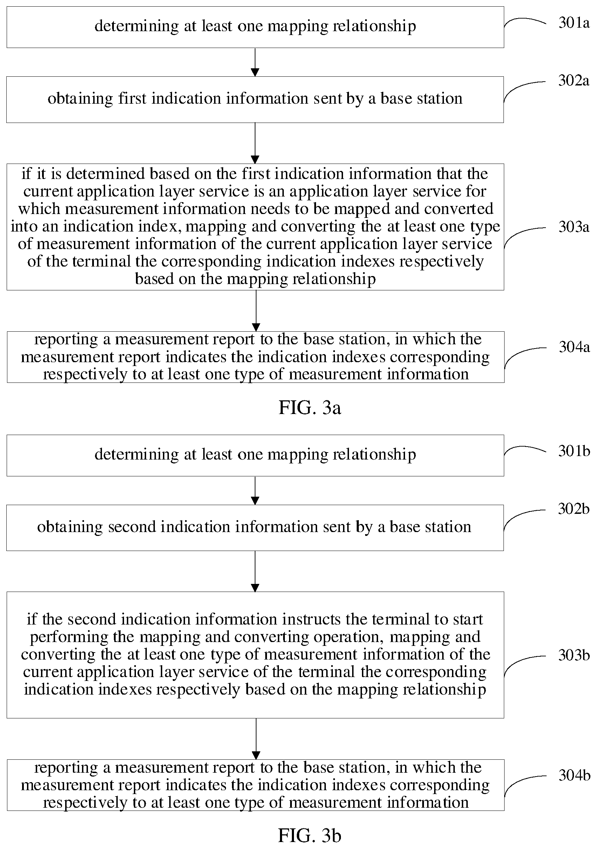

FIG. 3a is a schematic flowchart of a measurement reporting method provided by an embodiment of the present disclosure. The method is performed by a terminal. As shown in FIG. 3a, the measurement reporting method may include the following steps.

At step 301a, at least one mapping relationship is determined.

For detailed descriptions to step 301a, reference may be made to the above embodiments.

At step 302a, first indication information sent by a base station is obtained.

In an embodiment of the present disclosure, the first indication information may be specifically used to indicate at least one application layer service for which measurement information needs to be mapped and converted into an indication index. For example, the at least one application layer service for which the measurement information needs to be mapped and converted into the indication index may be a VR service, an AR service, a CG service, etc.

In some embodiments, the first indication information may be sent by the base station as needed, and the first indication information may be transmitted in at least one of the following ways:
RRC signaling, such as system information and/or an RRC reconfiguration message.

MAC CE signaling; or
Downlink Control Information (DCI) signaling.

At step 303a, if it is determined based on the first indication information that the current application layer service is an application layer service for which measurement information needs to be mapped and converted into an indication index, the at least one type of measurement information of the current application layer service of the terminal is mapped and converted the corresponding indication indexes respectively based on the mapping relationship.

In an embodiment of the present disclosure, only when it is determined that the current application layer service is an application layer service for which measurement information needs to be mapped and converted into an indication index, at least one type of measurement information of the current application layer service of the terminal is mapped and converted to the corresponding indication index based on the mapping relationship. For example, assume that the first indication information indicates that the at least one application layer service for which the measurement information needs to be mapped and converted into the indication index is a VR service, an AR service, or a CG service. In this case, only when the current application layer service is a VR service, an AR service, or a CG service, the at least one type of measurement information of the current application layer service of the terminal is mapped and converted into the corresponding indication index based on the mapping relationship.

At step 304a, a measurement report is reported to the base station. The measurement report indicates the indication indexes corresponding respectively to at least one type of measurement information.

For detailed descriptions to steps 303a-304a, reference may be made to the above embodiments.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 3b is a schematic flowchart of a measurement reporting method provided by an embodiment of the present disclosure. The method is performed by a terminal. As shown in FIG. 3b, the measurement reporting method may include the following steps.

At step 301b, at least one mapping relationship is determined.

For detailed descriptions to step 301b, reference may be made to the above embodiments.

At step 302b, second indication information sent by a base station is obtained.

In an embodiment of the present disclosure, the second indication information is used to instruct the terminal to start or stop performing a mapping and converting operation. The above-mentioned mapping and converting operation may specifically include: mapping and converting the at least one type of measurement information of the current application layer service of the terminal into the corresponding indication indexes respectively based on the mapping relationship.

In some embodiments, the second indication information may be sent by the base station as needed, and the second indication information may be transmitted in at least one of the following ways:
RRC signaling, such as system information and/or an RRC reconfiguration messages;
MAC CE signaling; or
DCI signaling.

At step 303b, if the second indication information instructs the terminal to start performing the mapping and converting operation, the at least one type of measurement information of the current application layer service of the terminal is mapped and converted into the corresponding indication indexes based on the mapping relationship.

In an embodiment of the present disclosure, only when the second instruction information instructs the terminal to start performing the mapping and converting operation, the terminal starts to map and convert the at least one type of measurement information of the current application layer service of the terminal into the corresponding indication indexes respectively based on the mapping relationship.

It should be noted that, referring to the above steps 301b-302b, it can be seen that in this embodiment, after the terminal determines the at least one mapping relationship, the terminal does not immediately map and convert the at least one type of measurement information of the current application layer service into the corresponding indication indexes respectively based on the mapping relationship, but after receiving the second indication information for instructing the terminal to start performing the mapping and converting operation sent by the base station, the terminal starts to map and convert the at least one type of measurement information of the current application layer service of the terminal into the corresponding indication indexes respectively based on the mapping relationship. Based on this, for the method of this embodiment, in order to prevent the terminal from directly starting to perform the mapping and converting operation after determining the at least one mapping relationship, in an embodiment of the present disclosure, a protocol can be used, to enable the terminal to start performing the mapping and converting operation only after receiving the second indication information for instructing the terminal to start performing the mapping and converting operation; or, in another embodiment of the present disclosure, the base station can inform the terminal that it must receive the second indication information for instructing the terminal to start performing the mapping and converting operation, and then starts to perform the mapping and converting operation.

Furthermore, in an embodiment of the present disclosure, if the second indication information instructs the terminal to stop performing the mapping and converting operation, the terminal no longer maps and converts the at least one type of measurement information of the current application layer service of the terminal into the corresponding indication indexes respectively based on the mapping relationship.

At step 304b, a measurement report is reported to the base station. The measurement report indicates the indication indexes corresponding respectively to at least one type of measurement information.

For detailed descriptions to steps 303b-304b, reference may be made to the above embodiments.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

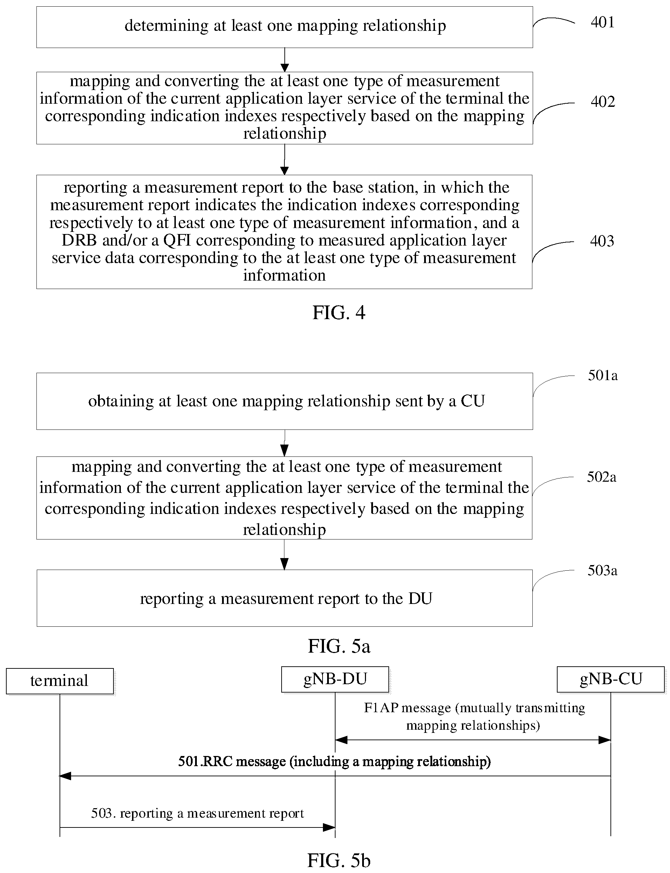

FIG. 4 is a schematic flowchart of a measurement reporting method provided by an embodiment of the present disclosure. The method is performed by a terminal. As shown in FIG. 4, the measurement reporting method may include the following steps.

At step 401, at least one mapping relationship is determined.

At step 402, at least one type of measurement information of a current application layer service of the terminal is mapped and converted into corresponding indication indexes respectively based on the mapping relationship.

At step 403, a measurement report is reported to the base station. The measurement report indicates the indication indexes corresponding respectively to at least one type of measurement information, and a data radio bearer (DRB) and/or a quality of service flow identifier (QFI) corresponding to measured application layer service data corresponding to the at least one type of measurement information.

In an embodiment of the present disclosure, in addition to the indication indexes corresponding respectively to the at least one type of measurement information, the measurement report may also include at least one of the following:
a data radio bearer (DRB) corresponding to measured application layer service data corresponding to the at least one type of measurement information
a quality of service flow identifier (QFI) corresponding to measured application layer service data corresponding to the at least one type of measurement information;
a protocol data unit (PDU) of a DRB corresponding to measured application layer service data corresponding to the at least one type of measurement information; or
a PDU of a QFI corresponding to measured application layer service data corresponding to the at least one type of measurement information.

In an embodiment of the present disclosure, when the measurement report includes the DRB corresponding to the measured application layer service data corresponding to the at least one type of measurement information, and/or the QFI corresponding to measured application layer service data corresponding to the at least one type of measurement information, it means that the measurement report explicitly indicates the DRB and/or the QFI corresponding to the measurement information. When the measurement report includes the PDU of the DRB corresponding to the measured application layer service data corresponding to the at least one type of measurement information and/or the PDU of the QFI corresponding to the measured application layer service data corresponding to the at least one type of measurement information, it means that the measurement report implicitly indicates the DRB and/or the QFI corresponding to the measurement information.

In an embodiment of the present disclosure, by including any one or more of the above-mentioned DRB, QFI, PDU of DRB, or PDU of QFI in the measurement report, so that subsequently the base station can schedule the corresponding resources based on any one or more of the DRB, QFI, PDU of DRB, or PDU of QFI. This part will be introduced in detail in subsequent embodiments.

For detailed descriptions to steps 401-403, reference may be made to the above embodiment.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 5a is a schematic flowchart of a measurement reporting method provided by an embodiment of the present disclosure. The method is performed by a terminal. In the embodiment shown in FIG. 5a, the base station is a base station with a centralized unit (CU)-distributed unit (DU) splitting architecture. Based on this, as shown in FIG. 5a, the measurement reporting method may include the following steps.

At step 501a, at least one mapping relationship sent by a CU is obtained.

In an embodiment of the present disclosure, the terminal may obtain the at least one mapping relationship sent by the CU through an RRC message. The RRC message may be system information and/or an RRC reconfiguration message.

The at least one mapping relationship may be generated by the CU (such as autonomously generated by the CU or generated by the CU based on a predetermined protocol) or generated by a DU (such as generated autonomously by the DU or generated by the DU based on the predetermined protocol). In an embodiment of the present disclosure, when the at least one mapping relationship is generated by the CU, the CU also needs to send the at least one mapping relationship to the DU, so that the DU may subsequently, based on the at least one mapping relationship and a measurement report reported by the terminal, schedule resources for the terminal, or so that the DU may send an indication to start or stop performing a mapping and converting operation to the UE through MAC CE or DCI (i.e., the second indication information in the above embodiments). The CU may send the at least one mapping relationship to the DU through an F1AP message, in which the F1AP message may be at least one or more of the followings:
DL RRC MESSAGE TRANSFER;
SYSTEM INFORMATION DELIVERY COMMAND;
F1 SETUP RESPONSE;
GNB-CU CONFIGURATION UPDATE;
GNB-DU CONFIGURATION UPDATE ACKNOWLEDGE;
UE CONTEXT SETUP REQUEST;
UE CONTEXT MODIFICATION REQUEST; or
other F1AP messages (for example, APPLICATION MAPPING CONFIGURATION INFORMATION).

In another embodiment of the present disclosure, when the at least one mapping relationship is generated by DU, the DU needs to send the at least one mapping relationship to the CU, so that the CU may send the at least one mapping relationship to the terminal. The DU may send the at least one mapping relationship to the DU through an F1AP message, in which the F1AP message may be at least one or more of the followings:
F1 SETUP REQUEST;
GNB-DU CONFIGURATION UPDATE;
GNB-CU CONFIGURATION UPDATE ACKNOWLEDGE;
UE CONTEXT SETUP RESPONSE;
UE CONTEXT MODIFICATION RESPONSE;
UE CONTEXT MODIFICATION REQUIRED; or
other F1AP messages (for example, APPLICATION MAPPING CONFIGURATION INFORMATION).

At step 502a, at least one type of measurement information of a current application layer service of the terminal is mapped and converted into corresponding indication indexes respectively based on the mapping relationship.

At step 503a, a measurement report is reported to the DU.

In an embodiment of the present disclosure, since a scheduler of the base station is located in the DU, the DU needs to schedule the terminal. Based on this, in the embodiments of the present disclosure, the terminal directly reports the measurement report to the DU, so that the DU directly schedules the terminal based on the measurement report, which avoids the process that the terminal first reports the measurement report to the CU through the DU and then the CU forwards the measurement report to the DU, so that the transmission latency can be reduced, and the base station may schedule the terminal promptly and accurately, thus improving user experience and reducing service capacity.

Further, FIG. 5b is an interactive schematic diagram of a measurement reporting method provided by an embodiment of the present disclosure. As shown in FIG. 5b, the DU and the CU may mutually transmit mapping relationships, and the CU may send at least one mapping relationship to the terminal (that is, the above step 501a). After that, after the terminal determines a measurement report indicating an indication index corresponding to the at least one type of measurement information of the current application layer service, the terminal reports the measurement report to the DU, so that the DU schedules resources based on the measurement report. By Comparing FIG. 5b with FIG. 1a of the related art, it can be seen that the process steps of the terminal reporting the measurement report to the DU in the present disclosure are significantly less than the process steps of the terminal reporting the measurement report to the DU in the related art. Therefore, the transmission latency in the present disclosure is smaller.

For detailed descriptions to steps 501a-503a, reference may be made to the above embodiment.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

Further, in the present disclosure, the terminal directly reports the measurement report to the DU, so that the DU directly schedules the terminal based on the measurement report, which avoids the process that the terminal first reports the measurement report to the CU through the DU and then the CU forwards the measurement report to the DU, so that the transmission latency can be reduced, and the base station may schedule the terminal promptly and accurately, thus improving user experience and reducing service capacity.

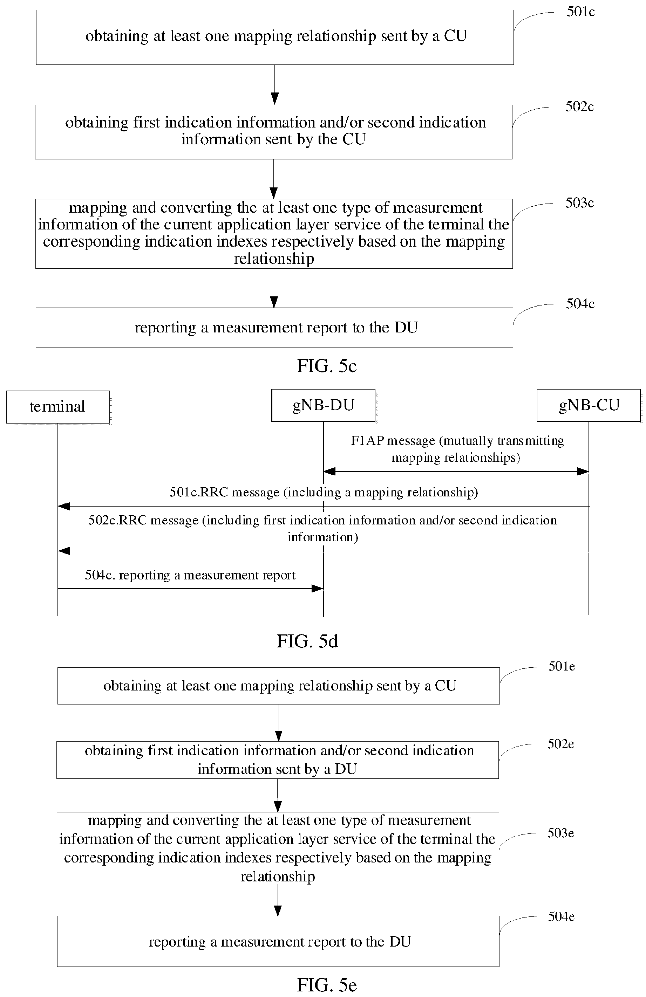

FIG. 5c is a schematic flowchart of a measurement reporting method provided by an embodiment of the present disclosure. The method is performed by a terminal. In the embodiment shown in FIG. 5c, the base station is a base station with a CU-DU splitting architecture. Based on this, as shown in FIG. 5c, the measurement reporting method may include the following steps.

At step 501c, at least one mapping relationship sent by a CU is obtained.

At step 502c, first indication information and/or second indication information sent by the CU are obtained.

In an embodiment of the present disclosure, the CU may send the first indication information and/or the second indication information to the terminal according to its own needs or a request from the DU.

In an embodiment of the present disclosure, the terminal may first obtain the at least one mapping relationship sent by the CU through an RRC message, and then obtain the first indication information and/or the second indication information sent by the CU through an RRC message. After obtaining the first indication information and/or the second indication information, the terminal starts to perform a mapping and converting operation based on the first indication information and/or the second indication information.

In another embodiment of the present disclosure, the terminal may first obtain the at least one mapping relationship sent by the CU through an RRC message and store the at least one mapping relationship, and then obtain the first indication information and/or the second indication information sent by the CU through MAC CE or DCI. After obtaining the first indication information and/or the second indication information, the terminal starts to perform a mapping and converting operation based on the first indication information and/or the second indication information.

At step 503c, at least one type of measurement information of a current application layer service of the terminal is mapped and converted into corresponding indication indexes respectively based on the mapping relationship.

At step 504c, a measurement report is reported to the DU.

FIG. 5d is an interactive schematic diagram of a measurement reporting method provided by an embodiment of the present disclosure. As shown in FIG. 5d, the DU and the CU may mutually transmit mapping relationships, and the CU may send the mapping relationship to the terminal (that is, the above step 501c). After that, the CU sends the first indication information and/or the second indication information to the terminal (that is, the above step 502c) according to its own needs or a request from the DU. After the terminal determines a measurement report indicating an indication index corresponding to the at least one type of measurement information of the current application layer service, the terminal reports the measurement report to the DU, so that the DU schedules resources based on the measurement report. By Comparing FIG. 5d with FIG. 1a of the related art, it can be seen that the process steps of the terminal reporting the measurement report to the DU in the present disclosure are significantly less than the process steps of the terminal reporting the measurement report to the DU in the related art. Therefore, the transmission latency in the present disclosure is smaller. In addition, in the present disclosure, the CU can send the second indication information to the terminal according to the situation or the request from the DU to flexibly start or stop the terminal's mapping and converting operation and/or reporting of the mapping result (i.e., the above-mentioned measurement report), so that unnecessary mapping operations and reporting can be reduced, thereby saving power of the terminal, and making the network aware the application layer more flexible.

For detailed descriptions to steps 501c-504c, reference may be made to the above embodiment.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

Further, in the present disclosure, the terminal directly reports the measurement report to the DU, so that the DU directly schedules the terminal based on the measurement report, which avoids the process that the terminal first reports the measurement report to the CU through the DU and then the CU forwards the measurement report to the DU, so that the transmission latency can be reduced, and the base station may schedule the terminal promptly and accurately, thus improving user experience and reducing service capacity. Furthermore, in the measurement reporting method provided by the embodiments of the present disclosure, the terminal may determine the second indication information. The second indication information can allow the CU to decide whether to cause the terminal to start or stop the mapping operation and/or reporting of the mapping result according to the situation or the request from the DU. In this way, unnecessary mapping operations and reporting can be reduced, thereby saving power of the terminal, and making the network aware the application layer more flexible.

FIG. 5e is a schematic flowchart of a measurement reporting method provided by an embodiment of the present disclosure. The method is performed by a terminal. In the embodiment shown in FIG. 5e, the base station is a base station with a CU-DU splitting architecture. Based on this, as shown in FIG. 5e, the measurement reporting method may include the following steps.

At step 501e, at least one mapping relationship sent by a CU is obtained.

At step 502e, first indication information and/or second indication information sent by a DU are obtained.

In an embodiment of the present disclosure, the DU may send the first indication information and/or the second indication information to the terminal according to its own needs.

At step 503e, at least one type of measurement information of a current application layer service of the terminal is mapped and converted into corresponding indication indexes respectively based on the mapping relationship.

At step 504e, a measurement report is reported to the DU.

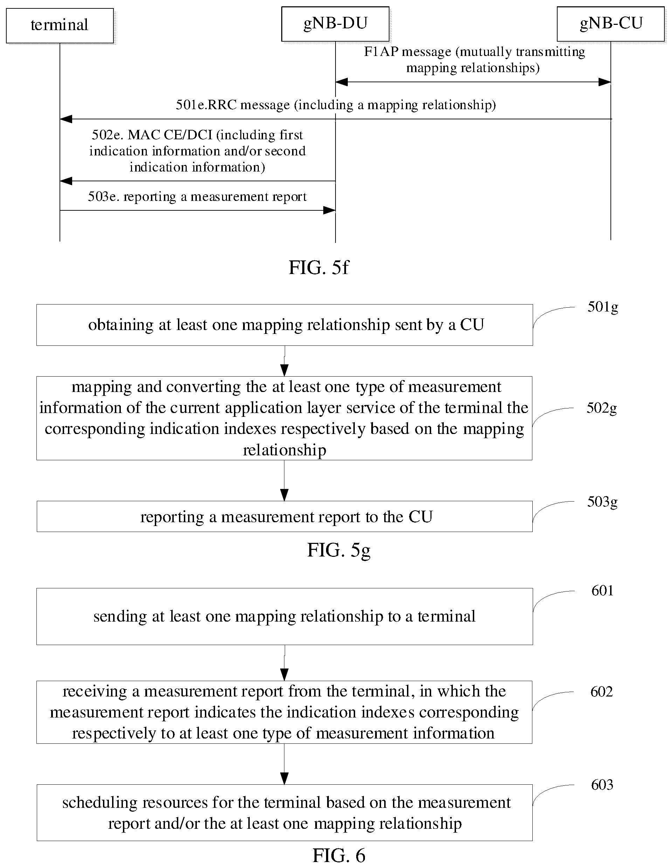

FIG. 5f is an interactive schematic diagram of a measurement reporting method provided by an embodiment of the present disclosure. As shown in FIG. 5f, the DU and the CU may mutually transmit mapping relationships, and the CU may send at least one mapping relationship to the terminal (that is, the above step 501e). After that, the DU sends the first indication information and/or the second indication information to the terminal (that is, the above step 502e) according to its own needs. After the terminal determines a measurement report indicating an indication index corresponding to the at least one type of measurement information of the current application layer service, the terminal reports the measurement report to the DU, so that the DU schedules resources based on the measurement report. By Comparing FIG. 5f with FIG. 1a of the related art, it can be seen that the process steps of the terminal reporting the measurement report to the DU in the present disclosure are significantly less than the process steps of the terminal reporting the measurement report to the DU in the related art. Therefore, the transmission latency in the present disclosure is smaller. In addition, in the present disclosure, the DU can send the second indication information to the terminal according to the situation to flexibly start or stop the terminal's mapping and converting operation and/or reporting of the mapping result, so that unnecessary mapping operations and reporting can be reduced, thereby saving power of the terminal, and making the network aware the application layer more flexible.

For detailed descriptions to steps 501e-504e, reference may be made to the above embodiment.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

Further, in the present disclosure, the terminal directly reports the measurement report to the DU, so that the DU directly schedules the terminal based on the measurement report, which avoids the process that the terminal first reports the measurement report to the CU through the DU and then the CU forwards the measurement report to the DU, so that the transmission latency can be reduced, and the base station may schedule the terminal promptly and accurately, thus improving user experience and reducing service capacity.

In the measurement reporting method provided by the embodiments of the present disclosure, the terminal may determine the second indication information. The second indication information can allow the DU to decide whether to cause the terminal to start or stop the mapping operation and/or reporting of the mapping result according to the situation. In this way, unnecessary mapping operations and reporting can be reduced, thereby saving power of the terminal, and making the network aware the application layer more flexible.

FIG. 5g is a schematic flowchart of a measurement reporting method provided by an embodiment of the present disclosure. The method is performed by a terminal. In the embodiment shown in FIG. 5g, the base station is a base station with a CU-DU splitting architecture. Based on this, as shown in FIG. 5g, the measurement reporting method may include the following steps.

At step 501g, at least one mapping relationship sent by a CU is obtained.

At step 502g, at least one type of measurement information of a current application layer service of the terminal is mapped and converted into corresponding indication indexes respectively based on the mapping relationship.

At step 503g, a measurement report is reported to the CU.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 6 is a flowchart of a measurement reporting method according to an embodiment of the present disclosure. The method is performed by a base station. As illustrated in FIG. 6, the method may include, but not limited to, the following steps.

At step 601, at least one mapping relationship is sent to a terminal.

At step 602, a measurement report from the terminal is received. The measurement report indicates the indication indexes corresponding respectively to at least one type of measurement information.

For detailed descriptions to steps 601-602, reference may be made to the above embodiment.

At step 603, resources are scheduled for the terminal based on the measurement report and/or the at least one mapping relationship.

In an embodiment of the present disclosure, the method for scheduling resources for the terminal based on the measurement report and/or the at least one mapping relationship may include the following steps.

Step 1, at least one type of measurement information of a current application layer service of the terminal is determined based on the at least one mapping relationship and indication indexes corresponding respectively to the at least one type of measurement information indicated in the measurement report.

Specifically, in an embodiment of the present disclosure, the base station needs to first determine the at least one mapping relationship that is applicable to the current application layer service and corresponds to various types of measurement information of the current application layer service, and then based on the at least one mapping relationship, searches for the measurement information corresponding to the indication index corresponding to the at least one type of measurement information reported by the terminal.

For example, taking first-type measurement information as an example, assume that the at least one mapping relationship includes three first-type mapping relationships, namely: first-type mapping relationship #1, first-type mapping relationship #2, first-type mapping relationship #3. The first-type mapping relationship #1 is applicable to a VR service, the first-type mapping relationship #2 is applicable to an AR service, and the first-type mapping relationship #3 is applicable to a CG service. In this case, if the current application layer service of the terminal is a VR service, the base station can search for the measurement information corresponding to the indication index corresponding to the first-type measurement information reported by the terminal based on the first-type mapping relationship #1. Assume that the first-type mapping relationship #1 includes: the corresponding indication index being 1 when a value range of the first-type measurement information is [0,2), and the corresponding indication index being 2 when the value range of the first-type measurement information is [2,4), and the corresponding indication index being 3 when the value range of the first-type measurement information is [4,6). In this case, if the indication index corresponding to the first-type measurement information measured for the current application layer service reported by the terminal device is 3, it can be determined that the value range of the first-type measurement information obtained from the measurement of the current application layer service is [ 4,6).

Step 2, DRB priorities corresponding to various types of measurement information are scheduled based on the at least one type of measurement information, and/or discontinuous reception (DRX) cycles are configured for measured application layer service data corresponding to various types of measurement information based on the at least one type of measurement information.

In an embodiment of the present disclosure, the above-mentioned DRB corresponding to the measurement information specifically refers to: the DRB corresponding to the measured application layer service data corresponding to the measurement information. In an embodiment of the present disclosure, the method of scheduling the DRB priorities corresponding to various types of measurement information based on the at least one type of measurement information mainly includes: determining a transmission situation or a buffer situation of the measured application layer service data corresponding to various types of measurement information based on the various types of measurement information, if it is determined that the measured application layer service data corresponding to a type of measurement information has a higher transmission latency or if it is determined that the measured application layer service data corresponding to a type of measurement information has a poorer buffer level, increasing the DRB priority corresponding to this type of measurement information to prioritize (such as transmitting or buffering) the measured application layer service data corresponding to this type of measurement information, so as to avoid the situation that certain application layer service data has a poor buffer level or a high transmission latency for a long time, thus ensuring user experience; or if it is determined that the measured application layer service data corresponding to a type of measurement information has a higher buffer level, decreasing the DRB priority corresponding to this type of measurement information to allocate more resources (such as for transmitting or buffering) to the measured application layer service data corresponding to this type of measurement information with a poor result while ensuring the user experience, so as to avoid the situation that certain application layer service data has a low buffer level or a high transmission latency for a long time, thus ensuring user experience and improving system capacity.

For example, the indication index corresponding to the first-type measurement information is taken as an example. Assume that the base station determines that the indication index corresponding to the first-type measurement information is 3, and then determines based on the first-type mapping relationship that the indication index corresponding to the first-type measurement information being 3 indicates the value range [4,6) of the first-type measurement information, the value of the first-type measurement information is high. Since the first-type measurement information is measurement information related to the latency, it means that the measured application layer service data corresponding to the first-type measurement information of the current application layer service has a higher latency. In this case, the DRB priority corresponding to the measured application layer service data corresponding to the first-type measurement information should be increased to prioritize the measured application layer service data corresponding to the first-type measurement information, so as to avoid long-term high latency and ensure user experience.

Alternatively, the indication index corresponding to the second-type measurement information is taken as an example. Assume that the base station determines that the indication index corresponding to the second-type measurement information is 1, and then determines based on the second-type mapping relationship that the indication index corresponding to the second-type measurement information being 1 indicates the value range [5,6) of the first-type measurement information, the value of the second-type measurement information is high. Since the second-type measurement information is measurement information related to the buffer, it means that the measured application layer service data corresponding to the second-type measurement information of the current application layer service has a higher buffer level. In this case, the DRB priority corresponding to the measured application layer service data corresponding to the second-type measurement information should be decreased and allocate more resources for the measured application layer service data of this type of measurement information with a poor result, so as to ensure user experience and improve system capacity.

In an embodiment of the present disclosure, the above-mentioned method of configuring the DRX cycles for the measured application layer service data corresponding to various types of measurement information based on the at least one type of measurement information mainly includes: determining sending and receiving time of the measured application layer service data corresponding to various types of DRX cycles based on the various types of measurement information, and configuring the DRX cycles for the terminal based on the sending and receiving time of the measured application layer service data corresponding to the various types of measurement information. That is, the terminal only monitors the channel status at the sending and receiving time of the measured application layer service data corresponding to the various types of measurement information, but does not monitor the channel status for a long time. Therefore, the terminal can be switched to a matched power saving mode based on the sending and receiving time of the various types of measurement information, thus saving power of the terminal.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

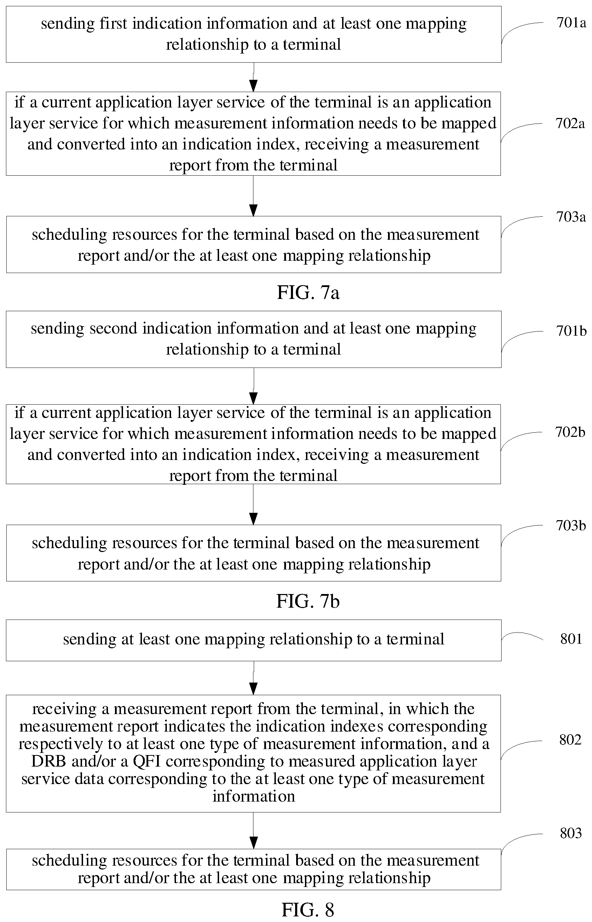

FIG. 7a is a flowchart of a measurement reporting method according to an embodiment of the present disclosure. The method is performed by a base station. As illustrated in FIG. 7a, the method may include, but not limited to, the following steps.

At step 701a, first indication information and at least one mapping relationship are sent to a terminal.

At step 702a, if a current application layer service of the terminal is an application layer service for which measurement information needs to be mapped and converted into an indication index, a measurement report from the terminal is received.

At step 703a, resources are scheduled for the terminal based on the measurement report and/or the at least one mapping relationship.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 7b is a flowchart of a measurement reporting method according to an embodiment of the present disclosure. The method is performed by a base station. As illustrated in FIG. 7b, the method may include, but not limited to, the following steps.

At step 701b, second indication information and at least one mapping relationship are sent to a terminal.

At step 702b, if the second indication information instructs the terminal to start performing a mapping and converting operation, a measurement report from the terminal is received.

At step 703b, resources are scheduled for the terminal based on the measurement report and/or the at least one mapping relationship.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 8 is a flowchart of a measurement reporting method according to an embodiment of the present disclosure. The method is performed by a base station. As illustrated in FIG. 8, the method may include, but not limited to, the following steps.

At step 801, at least one mapping relationship is sent to a terminal.

At step 802, a measurement report from the terminal is received. The measurement report indicates the indication indexes corresponding respectively to at least one type of measurement information, and a DRB and/or a QFI corresponding to measured application layer service data corresponding to the at least one type of measurement information.

At step 803, resources are scheduled for the terminal based on the measurement report and/or the at least one mapping relationship.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

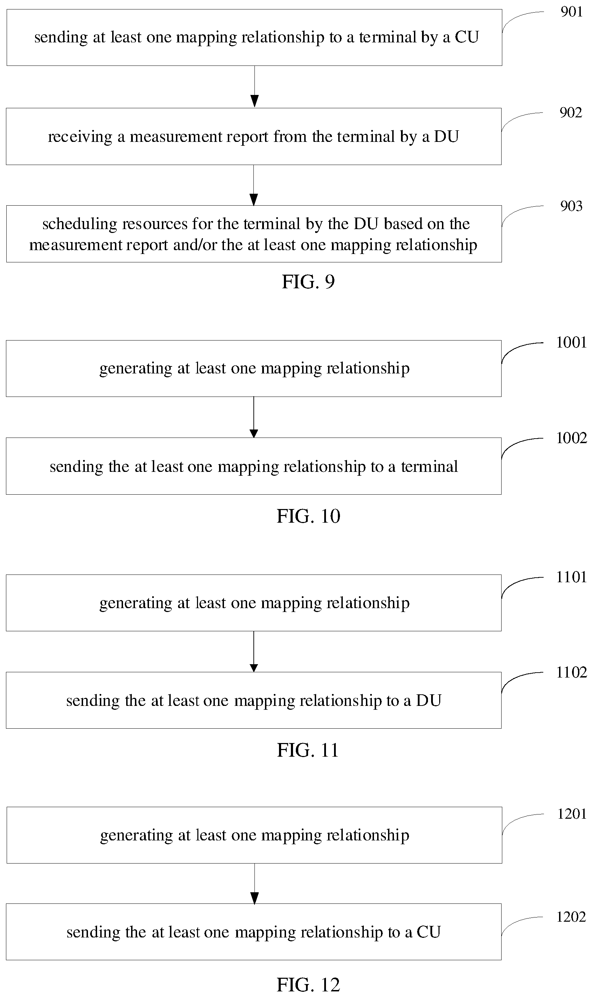

FIG. 9 is a flowchart of a measurement reporting method according to an embodiment of the present disclosure. The method is performed by a base station. In the embodiment shown in FIG. 9, the base station is a base station with a CU-DU splitting architecture. Based on this, as illustrated in FIG. 9, the method may include, but not limited to, the following steps.

At step 901, at least one mapping relationship is sent to a terminal by a CU.

The at least one mapping relationship may be generated by the CU or generated by a DU. In an embodiment of the present disclosure, when the at least one mapping relationship is generated by the CU, the CU also needs to send the at least one mapping relationship to the DU, so that the DU may subsequently, based on the at least one mapping relationship and a measurement report reported by the terminal, schedule resources for the terminal. The CU may send the at least one mapping relationship to the DU through an F1AP message, in which the F1AP message may be at least one or more of the followings:
DL RRC MESSAGE TRANSFER;
SYSTEM INFORMATION DELIVERY COMMAND;
F1 SETUP RESPONSE;
GNB-CU CONFIGURATION UPDATE;
GNB-DU CONFIGURATION UPDATE ACKNOWLEDGE;
UE CONTEXT SETUP REQUEST;
UE CONTEXT MODIFICATION REQUEST; or
other F1AP messages (for example, APPLICATION MAPPING CONFIGURATION INFORMATION).

In another embodiment of the present disclosure, when the at least one mapping relationship is generated by DU, the DU needs to send the at least one mapping relationship to the CU, so that the CU may send the at least one mapping relationship to the terminal. The DU may send the at least one mapping relationship to the DU through an F1AP message, in which the F1AP message may be at least one or more of the followings:
F1 SETUP REQUEST;
GNB-DU CONFIGURATION UPDATE;
GNB-CU CONFIGURATION UPDATE ACKNOWLEDGE;
UE CONTEXT SETUP RESPONSE;
UE CONTEXT MODIFICATION RESPONSE;
UE CONTEXT MODIFICATION REQUIRED; or
other F1AP messages (for example, APPLICATION MAPPING CONFIGURATION INFORMATION).

At step 902, a measurement report from the terminal is received by the DU.

At step 903, resources are scheduled for the terminal by the DU based on the measurement report and/or the at least one mapping relationship.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 10 is a flowchart of a measurement reporting method according to an embodiment of the present disclosure. The method is performed by a CU. As illustrated in FIG. 10, the method may include, but not limited to, the following steps.

At step 1001, at least one mapping relationship is generated.

At step 1002, the at least one mapping relationship is sent to a terminal.

For detailed descriptions to steps 1001-1002, reference may be made to the above embodiment.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 11 is a flowchart of a measurement reporting method according to an embodiment of the present disclosure. The method is performed by a CU. As illustrated in FIG. 11, the method may include, but not limited to, the following steps.

At step 1101, at least one mapping relationship is generated.

At step 1102, the at least one mapping relationship is sent to a DU.

For detailed descriptions to steps 1101-1102, reference may be made to the above embodiments.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 12 is a flowchart of a measurement reporting method according to an embodiment of the present disclosure. The method is performed by a DU. As illustrated in FIG. 12, the method may include, but not limited to, the following steps.

At step 1201, at least one mapping relationship is generated.

At step 1202, the at least one mapping relationship is sent to a CU.

For detailed descriptions to steps 1201-1202, reference may be made to the above embodiments.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

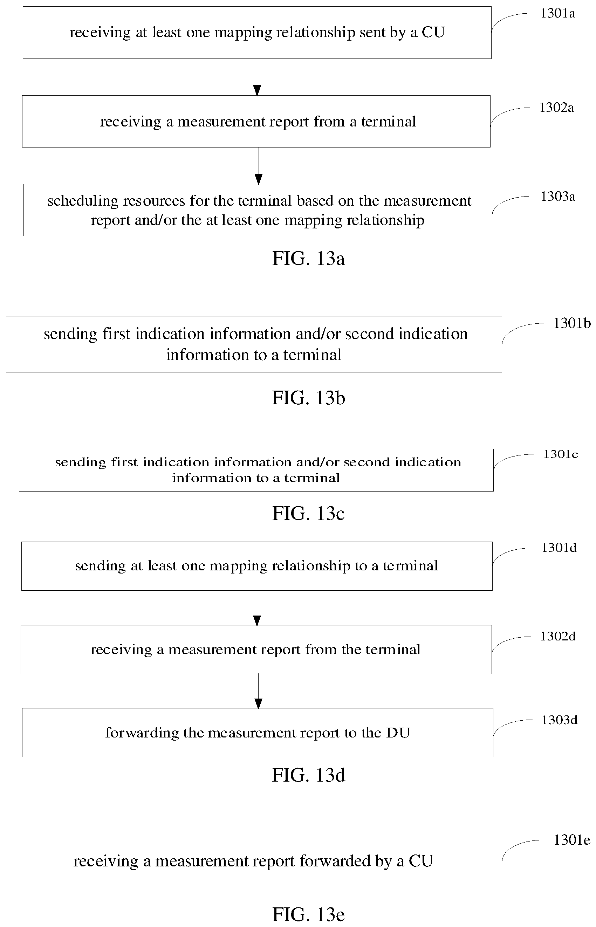

FIG. 13a is a flowchart of a measurement reporting method according to an embodiment of the present disclosure. The method is performed by a DU. As illustrated in FIG. 13a, the method may include, but not limited to, the following steps.

At step 1301a, at least one mapping relationship sent by a CU is received.

At step 1302a, a measurement report from a terminal is received.

At step 1303a, resources are scheduled for the terminal based on the measurement report and/or the at least one mapping relationship.

For detailed descriptions to steps 1301a-1303a, reference may be made to the above embodiments.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 13b is a flowchart of a measurement reporting method according to an embodiment of the present disclosure. The method is performed by a CU. As illustrated in FIG. 13b, the method may include, but not limited to, the following steps.

At step 1301b, first indication information and/or second indication information are sent to a terminal.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 13c is a flowchart of a measurement reporting method according to an embodiment of the present disclosure. The method is performed by a DU. As illustrated in FIG. 13c, the method may include, but not limited to, the following steps.

At step 1301c, first indication information and/or second indication information are sent to a terminal.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 13d is a flowchart of a measurement reporting method according to an embodiment of the present disclosure. The method is performed by a CU. As illustrated in FIG. 13d, the method may include, but not limited to, the following steps.

At step 1301d, at least one mapping relationship is sent to a terminal.

At step 1302d, a measurement report from the terminal is received.

At step 1303d, the measurement report is forwarded to a DU, or the measurement report is processed and measurement related information is sent to a DU. The measurement report being processed refers to that the CU convers the measurement report into the measurement related information (such as QoE information) based on the at least one mapping relationship, and the measurement related information is sent to the DU.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

FIG. 13e is a flowchart of a measurement reporting method according to an embodiment of the present disclosure. The method is performed by a DU. As illustrated in FIG. 13e, the method may include, but not limited to, the following steps.

At step 1301e, a measurement report forwarded by a CU is received.

To sum up, in the measurement reporting method provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

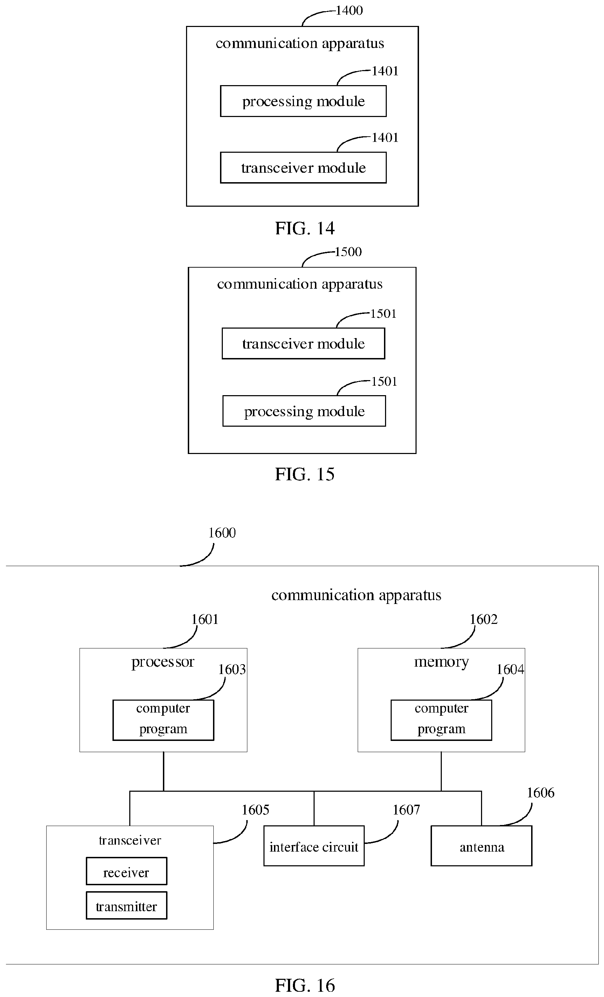

FIG. 14 is a block diagram of a communication apparatus according to an embodiment of the present disclosure. As shown in FIG. 14, the communication apparatus may include a processing module and a transceiver module.

The processing module is configured to: determine at least one mapping relationship, in which the mapping relationship includes a mapping relationship between measurement information of application layer services of the terminal and indication indexes.

The processing module is further configured to: map and convert at least one type of measurement information of a current application layer service of the terminal into corresponding indication indexes respectively based on the mapping relationship.

The transceiver module is configured to report a measurement report to a base station, in which the measurement report indicates the indication indexes corresponding respectively to the at least one type of measurement information.

To sum up, in the communication apparatus provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

Optionally, in an embodiment of the present disclosure, the measurement information of an application layer service includes at least one type of:
first-type measurement information related to a latency;
second-type measurement information related to a buffer;
third-type measurement information related to an event in an execution process of the application layer service;
fourth-type measurement information for indicating a cause that at least one metric exceeds a predetermined threshold;
fifth-type measurement information for indicating a quality of experience (QoE) value of the application layer service; or
sixth-type measurement information for indicating a latency jitter of a received packet of an application layer.

Optionally, in an embodiment of the present disclosure, the at least one mapping relationship includes at least one of:
at least one first-type mapping relationship for indicating a mapping relationship between the first-type measurement information and indication indexes, in which different first-type mapping relationships are applicable to different types of application layer services, or one first-type mapping relationship is applicable to all types of application layer services;
at least one second-type mapping relationship for indicating a mapping relationship between the second-type measurement information and indication indexes, in which different second-type mapping relationships are applicable to different types of application layer services, or one second-type mapping relationship is applicable to all types of application layer services;
at least one third-type mapping relationship for indicating a mapping relationship between the third-type measurement information and indication indexes, in which different third-type mapping relationships are applicable to different types of application layer services, or one third-type mapping relationship is applicable to all types of application layer services;
at least one fourth-type mapping relationship for indicating a mapping relationship between the fourth-type measurement information and indication indexes, in which different fourth-type mapping relationships are applicable to different types of application layer services, or one fourth-type mapping relationship is applicable to all types of application layer services;
at least one fifth-type mapping relationship for indicating a mapping relationship between the fifth-type measurement information and indication indexes, in which different fifth-type mapping relationships are applicable to different types of application layer services, or one fifth-type mapping relationship is applicable to all types of application layer services; or
at least one sixth-type mapping relationship for indicating a mapping relationship between the sixth-type measurement information and indication indexes, in which different sixth-type mapping relationships are applicable to different types of application layer services, or one sixth-type mapping relationship is applicable to all types of application layer services.

Optionally, in an embodiment of the present disclosure, the processing module is further configured to perform at least one of the followings:
determining the at least one mapping relationship based on a protocol agreement; or
determining the at least one mapping relationship based on an indication from the base station.

Optionally, in an embodiment of the present disclosure, the processing module is further configured to:
obtain the at least one mapping relationship sent by the base station through a radio resource control (RRC) message;
**in** which the RRC message includes system information and/or an RRC reconfiguration message.

Optionally, in an embodiment of the present disclosure, the apparatus is further configured to:
receive first indication information sent by the base station, in which the first indication information indicates at least one application layer service for which measurement information needs to be mapped and converted into an indication index;
the processing module is further configured to:
   **in** a case of determining, based on the first indication information, that the current application layer service is an application layer service for which measurement information needs to be mapped and converted into an indication index, map and convert the at least one type of measurement information of the current application layer service of the terminal into the corresponding indication indexes respectively based on the mapping relationship.

Optionally, in an embodiment of the present disclosure, the apparatus is further configured to:
obtain second indication information sent by the base station, in which the second indication information instructs the terminal to start or stop performing a mapping and converting operation, in which the mapping and converting operation comprises mapping and converting the at least one type of measurement information of the current application layer service of the terminal into the corresponding indication indexes respectively based on the mapping relationship;
in which mapping and converting the at least one type of measurement information of the current application layer service of the terminal into the corresponding indication indexes respectively based on the mapping relationship includes:
   in a case where the second indication information instructs the terminal to start performing the mapping and converting operation, mapping and converting the at least one type of measurement information of the current application layer service of the terminal into the corresponding indication indexes respectively based on the mapping relationship.

Optionally, in an embodiment of the present disclosure, the processing module is further configured to:
determine at least one mapping relationship applicable to the current application layer service and corresponding to various types of measurement information of the current application layer service;
determine the indication indexes corresponding respectively to the at least one type of measurement information of the current application layer service based on the at least one mapping relationship.

Optionally, in an embodiment of the present disclosure, the measurement report includes third indication information, and the third indication information indicates the indication indexes corresponding respectively to the at least one type of measurement information.

Optionally, in an embodiment of the present disclosure, the measurement report further includes at least one of:
a data radio bearer (DRB) corresponding to measured application layer service data corresponding to the at least one type of measurement information;
a quality of service flow identifier (QFI) corresponding to measured application layer service data corresponding to the at least one type of measurement information;
a protocol data unit (PDU) of a DRB corresponding to measured application layer service data corresponding to the at least one type of measurement information; or
a PDU of a QFI corresponding to measured application layer service data corresponding to the at least one type of measurement information.

Optionally, in an embodiment of the present disclosure, the transceiver module is further configured to perform at least one of the followings:
reporting the measurement report to the base station through a physical layer signaling;
reporting the measurement report to the base station through a media access control control element (MAC CE) signaling;
reporting the measurement report to the base station through a radio link control (RLC) protocol status report; or
reporting the measurement report to the base station through an RRC signaling.

Optionally, in an embodiment of the present disclosure, in a case where the base station is a base station with a centralized unit (CU)-distributed unit (DU) splitting architecture, the processing module is further configured to perform:
obtaining the at least one mapping relationship sent by a CU; and/or
obtaining the first indication information and/or the second indication information sent by a CU and/or a DU.

Optionally, in an embodiment of the present disclosure, in a case where the base station is a base station with a centralized unit (CU)-distributed unit (DU) splitting architecture, the transceiver module is further configured to perform at least one of the followings:
reporting the measurement report to a DU; or
reporting the measurement report to a CU.

FIG. 15 is a block diagram of a communication apparatus according to an embodiment of the present disclosure. As shown in FIG. 15, the communication apparatus may include a processing module and a transceiver module.

The transceiver module is configured to: send at least one mapping relationship to a terminal, in which the mapping relationship includes a mapping relationship between measurement information of application layer services of the terminal and indication indexes.

The transceiver module is further configured to: receive a measurement report from the terminal, in which the measurement report indicates indication indexes corresponding respectively to at least one type of measurement information.

The processing module is configured to schedule resources for the terminal based on the measurement report and/or the at least one mapping relationship.

To sum up, in the communication apparatus provided by the embodiments of the present disclosure, the terminal determines at least one mapping relationship. The mapping relationship includes the mapping relationship between the measurement information of the application layer services of the terminal and the indication indexes. The terminal maps and converts the at least one type of measurement information of the current application layer service of the terminal into the corresponding indication indexes respectively based on the mapping relationship, and reports the measurement report to the base station. The measurement report indicates the indication indexes corresponding respectively to the at least one type of measurement information. It can be seen that in the method of the present disclosure, the terminal does not directly and explicitly send the specific data of the at least one type of measurement information of the current application layer service to the base station, but sends the indication indexes for indicating the at least one type of measurement information to the base station. The data amount occupied by the indication indexes is much smaller than the data amount occupied by the specific data of the measurement information, which makes the time required for processing and transmitting the measurement report of the present disclosure shorter, thus on the basis of ensuring that the terminal can clearly report the measurement information, the sending processing time of the terminal and the receiving processing time of the base station may be reduced, so that a transmission latency is reduced, a lot of time may be saved, a reporting latency is effectively reduced, and reporting of the real-time measurement information of the application layer service may be speeded up, the base station may dynamically schedule and allocate wireless resources based on the real-time measurement information of the application layer service, thereby improving user experience, improving air interface resource utilization and increasing system capacity. Moreover, the present disclosure also simplifies the amount of reported data and can avoid unnecessary reporting of measurement information, thereby reducing overhead of air interface signaling.

Optionally, in an embodiment of the present disclosure, the measurement information of an application layer service includes at least one type of:
first-type measurement information related to a latency;
second-type measurement information related to a buffer;
third-type measurement information related to an event in an execution process of the application layer service;
fourth-type measurement information for indicating a cause that at least one metric exceeds a predetermined threshold;
fifth-type measurement information for indicating a quality of experience (QoE) value of the application layer service; or
sixth-type measurement information for indicating a latency jitter of a received packet of an application layer.

Optionally, in an embodiment of the present disclosure, the at least one mapping relationship includes at least one of:
at least one first-type mapping relationship for indicating a mapping relationship between the first-type measurement information and indication indexes, in which different first-type mapping relationships are applicable to different types of application layer services, or one first-type mapping relationship is applicable to all types of application layer services;
at least one second-type mapping relationship for indicating a mapping relationship between the second-type measurement information and indication indexes, in which different second-type mapping relationships are applicable to different types of application layer services, or one second-type mapping relationship is applicable to all types of application layer services;
at least one third-type mapping relationship for indicating a mapping relationship between the third-type measurement information and indication indexes, in which different third-type mapping relationships are applicable to different types of application layer services, or one third-type mapping relationship is applicable to all types of application layer services;
at least one fourth-type mapping relationship for indicating a mapping relationship between the fourth-type measurement information and indication indexes, in which different fourth-type mapping relationships are applicable to different types of application layer services, or one fourth-type mapping relationship is applicable to all types of application layer services;
at least one fifth-type mapping relationship for indicating a mapping relationship between the fifth-type measurement information and indication indexes, in which different fifth-type mapping relationships are applicable to different types of application layer services, or one fifth-type mapping relationship is applicable to all types of application layer services; or
at least one sixth-type mapping relationship for indicating a mapping relationship between the sixth-type measurement information and indication indexes, in which different sixth-type mapping relationships are applicable to different types of application layer services, or one sixth-type mapping relationship is applicable to all types of application layer services.

Optionally, in an embodiment of the present disclosure, the transceiver module is further configured to:
send the at least one mapping relationship to the terminal through a radio resource control (RRC) message;
in which the RRC message includes system information and/or an RRC reconfiguration message.

Optionally, in an embodiment of the present disclosure, the apparatus is further configured to:
send first indication information to the terminal, in which the first indication information indicates at least one application layer service for which measurement information needs to be mapped and converted into an indication index.

Optionally, in an embodiment of the present disclosure, the apparatus is further configured to:
send second indication information to the terminal, in which the second indication information instructs the terminal to start or stop performing a mapping and converting operation, in which the mapping and converting operation comprises mapping and converting at least one type of measurement information of a current application layer service of the terminal into corresponding indication indexes respectively based on the mapping relationship.

Optionally, in an embodiment of the present disclosure, the transceiver module is further configured to perform at least one of the followings:
receiving the measurement report from the terminal through a physical layer signaling;
receiving the measurement report from the terminal through a media access control control element (MAC CE) signaling;
receiving the measurement report from the terminal through a radio link control (RLC) protocol status report; or
receiving the measurement report from the terminal through an RRC signaling.

Optionally, in an embodiment of the present disclosure, the measurement report includes third indication information, and the third indication information indicates the indication indexes corresponding respectively to the at least one type of measurement information.

Optionally, in an embodiment of the present disclosure, the measurement report further includes at least one of:
a data radio bearer (DRB) corresponding to measured application layer service data corresponding to the at least one type of measurement information;
a quality of service flow identifier (QFI) corresponding to measured application layer service data corresponding to the at least one type of measurement information;
a protocol data unit (PDU) of a DRB corresponding to measured application layer service data corresponding to the at least one type of measurement information; or
a PDU of a QFI corresponding to measured application layer service data corresponding to the at least one type of measurement information.

Optionally, in an embodiment of the present disclosure, the processing module is further configured to:
determine at least one type of measurement information of a current application layer service of the terminal based on the at least one mapping relationship and the indication indexes corresponding respectively to the at least one type of measurement information indicated in the measurement report; and
schedule DRB priorities corresponding to various types of measurement information based on the at least one type of measurement information, and/or configure discontinuous reception (DRX) cycles for measured application layer service data corresponding to various types of measurement information based on the at least one type of measurement information.

Optionally, in an embodiment of the present disclosure, the base station is a base station with a centralized unit (CU)-distributed unit (DU) splitting architecture.

Optionally, in an embodiment of the present disclosure, the transceiver module is further configured to perform:
sending the at least one mapping relationship by a CU to the terminal; and/or
sending the first indication information and/or the second indication information by a CU and/or a DU to the terminal;
in which in a case where the at least one mapping relationship is generated by the CU, the CU is further configured to send the at least one mapping relationship to the DU;
in a case where the at least one mapping relationship is generated by the DU, the CU is further configured to receive the at least one mapping relationship sent by the DU.

Optionally, in an embodiment of the present disclosure, the transceiver module is further configured to perform at least one of the followings:
receiving the measurement report by a DU from the terminal; or
receiving the measurement report by a CU from the terminal.

Optionally, in an embodiment of the present disclosure, in a case where the CU receives the measurement report from the terminal, the apparatus is further configured to:
send, by the CU, the measurement report to the DU.

Optionally, in an embodiment of the present disclosure, the processing module is further configured to:
schedule, by the DU, the resources for the terminal based on the measurement report and/or the at least one mapping relationship.

FIG. 16 is a block diagram of a communication apparatus 1600 according to an embodiment of the present disclosure. The communication apparatus 1600 may be a terminal, a network device, a chip, a chip system, a processor, etc. that supports the terminal to implement the method, or a chip, a chip system, a processor, etc. that supports the network device to implement the method. The apparatus may be used to implement the method in the above method embodiments. For details, please refer to the above method embodiments.

The communication apparatus 1600 may include one or more processors 1601. The processor 1601 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 1600 may also include one or more memories 1602 for storing the computer program 1604. The processor 1601 executes the computer program 1604, to cause the communication apparatus 1600 to implement the method in the above method embodiments. Optionally, the memory 1602 may also store data. The communication apparatus 1600 and the memory 1602 may be set up separately or integrated together.

Optionally, the communication apparatus 1600 may also include a transceiver 1605 and an antenna 1606. The transceiver 1605 may be called a transceiver unit, a transceiver machine, or a transceiver circuit, etc., to implement the receiving and sending function. The transceiver 1605 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 1600 may also include one or more interface circuits 1607. The interface circuit 1607 is used to receive code instructions and transmit the code instructions to the processor 1601. The processor 1601 runs the code instructions to cause the communication apparatus 1600 to implement the method in the above method embodiment.

In one implementation, the processor 1601 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 1601 may store a computer program 1603. When the computer program 1603 is running on the processor 1601, the communication apparatus 1600 is caused to implement the method in the above method embodiments. The computer program 1603 may be solidified in the processor 1601, in which case the processor 1601 may be implemented in hardware.

In an implementation, the communication apparatus 1600 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a remote terminal, but the scope of the communication apparatus in the disclosure is not limited to this, and the structure of the communication apparatus may not be restricted by FIG. 16. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

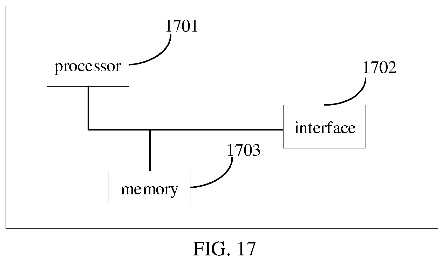

For the case where the communication apparatus may be a chip or a chip system, please refer to the structural diagram of a chip in FIG. 17. The chip shown in FIG. 17 includes a processor 1701 and an interface 1702. There may be one or more processors 1701, and there may be one or more interfaces 1702.

Optionally, the chip also includes a memory 1703, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to the embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that units and algorithm steps of the examples described in the embodiments of the present disclosure may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A measurement reporting method, performed by a terminal, comprising:
determining at least one mapping relationship, wherein the mapping relationship comprises a mapping relationship between measurement information of application layer services of the terminal and indication indexes;
mapping and converting at least one type of measurement information of a current application layer service of the terminal into corresponding indication indexes respectively based on the mapping relationship; and
reporting a measurement report to a base station, wherein the measurement report indicates the indication indexes corresponding respectively to the at least one type of measurement information.

2. The method of claim 1, wherein the measurement information of an application layer service comprises at least one type of:
first-type measurement information related to a latency;
second-type measurement information related to a buffer;
third-type measurement information related to an event in an execution process of the application layer service;
fourth-type measurement information for indicating a cause that at least one metric exceeds a predetermined threshold;
fifth-type measurement information for indicating a quality of experience (QoE) value of the application layer service; or
sixth-type measurement information for indicating a latency jitter of a received packet of an application layer.

3. The method of claim 2, wherein the at least one mapping relationship comprises at least one of:
at least one first-type mapping relationship for indicating a mapping relationship between the first-type measurement information and indication indexes, wherein different first-type mapping relationships are applicable to different types of application layer services, or one first-type mapping relationship is applicable to all types of application layer services;
at least one second-type mapping relationship for indicating a mapping relationship between the second-type measurement information and indication indexes, wherein different second-type mapping relationships are applicable to different types of application layer services, or one second-type mapping relationship is applicable to all types of application layer services;
at least one third-type mapping relationship for indicating a mapping relationship between the third-type measurement information and indication indexes, wherein different third-type mapping relationships are applicable to different types of application layer services, or one third-type mapping relationship is applicable to all types of application layer services;
at least one fourth-type mapping relationship for indicating a mapping relationship between the fourth-type measurement information and indication indexes, wherein different fourth-type mapping relationships are applicable to different types of application layer services, or one fourth-type mapping relationship is applicable to all types of application layer services;
at least one fifth-type mapping relationship for indicating a mapping relationship between the fifth-type measurement information and indication indexes, wherein different fifth-type mapping relationships are applicable to different types of application layer services, or one fifth-type mapping relationship is applicable to all types of application layer services; or
at least one sixth-type mapping relationship for indicating a mapping relationship between the sixth-type measurement information and indication indexes, wherein different sixth-type mapping relationships are applicable to different types of application layer services, or one sixth-type mapping relationship is applicable to all types of application layer services.

4. The method of claim 1, wherein determining the at least one mapping relationship comprises at least one of:
determining the at least one mapping relationship based on a protocol agreement; or
determining the at least one mapping relationship based on an indication from the base station.

5. The method of claim 4, wherein determining the at least one mapping relationship based on the indication from the base station comprises:
obtaining the at least one mapping relationship sent by the base station through a radio resource control (RRC) message;
wherein the RRC message comprises system information and/or an RRC reconfiguration message.

6. The method of claim 1, further comprising:
obtaining first indication information sent by the base station, wherein the first indication information indicates at least one application layer service for which measurement information needs to be mapped and converted into an indication index; wherein mapping and converting the at least one type of measurement information of the current application layer service of the terminal into the corresponding indication indexes respectively based on the mapping relationship comprises:
in a case of determining, based on the first indication information, that the current application layer service is an application layer service for which measurement information needs to be mapped and converted into an indication index, mapping and converting the at least one type of measurement information of the current application layer service of the terminal into the corresponding indication indexes respectively based on the mapping relationship.

7. The method of claim 1, further comprising:
obtaining second indication information sent by the base station, wherein the second indication information instructs the terminal to start or stop performing a mapping and converting operation, wherein the mapping and converting operation comprises mapping and converting the at least one type of measurement information of the current application layer service of the terminal into the corresponding indication indexes respectively based on the mapping relationship;
wherein mapping and converting the at least one type of measurement information of the current application layer service of the terminal into the corresponding indication indexes respectively based on the mapping relationship comprises:
in a case where the second indication information instructs the terminal to start performing the mapping and converting operation, mapping and converting the at least one type of measurement information of the current application layer service of the terminal into the corresponding indication indexes respectively based on the mapping relationship.

8. The method of claim 3, wherein mapping and converting the at least one type of measurement information of the current application layer service of the terminal into the corresponding indication indexes respectively based on the mapping relationship comprises:
determining at least one mapping relationship applicable to the current application layer service and corresponding to various types of measurement information of the current application layer service;
determining the indication indexes corresponding respectively to the at least one type of measurement information of the current application layer service based on the at least one mapping relationship.

9. The method of claim 1, wherein the measurement report comprises third indication information, and the third indication information indicates the indication indexes corresponding respectively to the at least one type of measurement information.

10. The method of claim 1, wherein the measurement report further comprises at least one of:
a data radio bearer (DRB) corresponding to measured application layer service data corresponding to the at least one type of measurement information;
a quality of service flow identifier (QFI) corresponding to measured application layer service data corresponding to the at least one type of measurement information;
a protocol data unit (PDU) of a DRB corresponding to measured application layer service data corresponding to the at least one type of measurement information; or
a PDU of a QFI corresponding to measured application layer service data corresponding to the at least one type of measurement information.

11. The method of claim 1, wherein reporting the measurement report to the base station comprises at least one of:
reporting the measurement report to the base station through a physical layer signaling;
reporting the measurement report to the base station through a media access control control element (MAC CE) signaling;
reporting the measurement report to the base station through a radio link control (RLC) protocol status report; or
reporting the measurement report to the base station through an RRC signaling.

12. The method of claim 4, 6 or 7, wherein in a case where the base station is a base station with a centralized unit (CU)-distributed unit (DU) splitting architecture, obtaining one or more of the at least one mapping relationship, the first indication information or the second indication information sent by the base station comprises:
obtaining the at least one mapping relationship sent by a CU; and/or
obtaining the first indication information and/or the second indication information sent by a CU and/or a DU.

13. The method of any of claims 1-11, wherein in a case where the base station is a base station with a CU- DU splitting architecture, reporting the measurement report to the base station comprises at least one of:
reporting the measurement report to a DU; or
reporting the measurement report to a CU.

14. A measurement reporting method, performed by a base station, comprising:
sending at least one mapping relationship to a terminal, wherein the mapping relationship comprises a mapping relationship between measurement information of application layer services of the terminal and indication indexes;
receiving a measurement report from the terminal, wherein the measurement report indicates indication indexes corresponding respectively to at least one type of measurement information; and
scheduling resources for the terminal based on the measurement report and/or the at least one mapping relationship.

15. The method of claim 14, wherein the measurement information of an application layer service comprises at least one type of:
first-type measurement information related to a latency;
second-type measurement information related to a buffer;
third-type measurement information related to an event in an execution process of the application layer service;
fourth-type measurement information for indicating a cause that at least one metric exceeds a predetermined threshold;
fifth-type measurement information for indicating a quality of experience (QoE) value of the application layer service; or
sixth-type measurement information for indicating a latency jitter of a received packet of an application layer.

16. The method of claim 15, wherein the at least one mapping relationship comprises at least one of:
at least one first-type mapping relationship for indicating a mapping relationship between the first-type measurement information and indication indexes, wherein different first-type mapping relationships are applicable to different types of application layer services, or one first-type mapping relationship is applicable to all types of application layer services;
at least one second-type mapping relationship for indicating a mapping relationship between the second-type measurement information and indication indexes, wherein different second-type mapping relationships are applicable to different types of application layer services, or one second-type mapping relationship is applicable to all types of application layer services;
at least one third-type mapping relationship for indicating a mapping relationship between the third-type measurement information and indication indexes, wherein different third-type mapping relationships are applicable to different types of application layer services, or one third-type mapping relationship is applicable to all types of application layer services;
at least one fourth-type mapping relationship for indicating a mapping relationship between the fourth-type measurement information and indication indexes, wherein different fourth-type mapping relationships are applicable to different types of application layer services, or one fourth-type mapping relationship is applicable to all types of application layer services;
at least one fifth-type mapping relationship for indicating a mapping relationship between the fifth-type measurement information and indication indexes, wherein different fifth-type mapping relationships are applicable to different types of application layer services, or one fifth-type mapping relationship is applicable to all types of application layer services; or
at least one sixth-type mapping relationship for indicating a mapping relationship between the sixth-type measurement information and indication indexes, wherein different sixth-type mapping relationships are applicable to different types of application layer services, or one sixth-type mapping relationship is applicable to all types of application layer services.

17. The method of claim 14, wherein sending the at least one mapping relationship to the terminal comprises:
sending the at least one mapping relationship to the terminal through a radio resource control (RRC) message;
wherein the RRC message comprises system information and/or an RRC reconfiguration message.

18. The method of claim 14, further comprising:
sending first indication information to the terminal, wherein the first indication information indicates at least one application layer service for which measurement information needs to be mapped and converted into an indication index.

19. The method of claim 14, further comprising:
sending second indication information to the terminal, wherein the second indication information instructs the terminal to start or stop performing a mapping and converting operation, wherein the mapping and converting operation comprises mapping and converting at least one type of measurement information of a current application layer service of the terminal into corresponding indication indexes respectively based on the mapping relationship.

20. The method of claim 14, wherein receiving the measurement report from the terminal comprises at least one of:
receiving the measurement report from the terminal through a physical layer signaling;
receiving the measurement report from the terminal through a media access control control element (MAC CE) signaling;
receiving the measurement report from the terminal through a radio link control (RLC) protocol status report; or
receiving the measurement report from the terminal through an RRC signaling.

21. The method of claim 14, wherein the measurement report comprises third indication information, and the third indication information indicates the indication indexes corresponding respectively to the at least one type of measurement information.

22. The method of claim 14, wherein the measurement report further comprises at least one of:
a data radio bearer (DRB) corresponding to measured application layer service data corresponding to the at least one type of measurement information;
a quality of service flow identifier (QFI) corresponding to measured application layer service data corresponding to the at least one type of measurement information;
a protocol data unit (PDU) of a DRB corresponding to measured application layer service data corresponding to the at least one type of measurement information; or
a PDU of a QFI corresponding to measured application layer service data corresponding to the at least one type of measurement information.

23. The method of claim 21, wherein scheduling the resources for the terminal based on the measurement report and/or the at least one mapping relationship comprises:
determining at least one type of measurement information of a current application layer service of the terminal based on the at least one mapping relationship and the indication indexes corresponding respectively to the at least one type of measurement information indicated in the measurement report; and
scheduling DRB priorities corresponding to various types of measurement information based on the at least one type of measurement information, and/or configuring discontinuous reception (DRX) cycles for measured application layer service data corresponding to various types of measurement information based on the at least one type of measurement information.

24. The method of any of claims 14-23, wherein the base station is a base station with a centralized unit (CU)-distributed unit (DU) splitting architecture.

25. The method of claim 24, wherein sending one or more of the at least one mapping relationship, the first indication information or the second indication information to the terminal comprises:
sending the at least one mapping relationship by a CU to the terminal; and/or
sending the first indication information and/or the second indication information by a CU and/or a DU to the terminal;
wherein in a case where the at least one mapping relationship is generated by the CU, the CU is further configured to send the at least one mapping relationship to the DU;
in a case where the at least one mapping relationship is generated by the DU, the CU is further configured to receive the at least one mapping relationship sent by the DU.

26. The method of claim 24, wherein receiving the measurement report from the terminal comprises at least one of:
receiving the measurement report by a DU from the terminal; or
receiving the measurement report by a CU from the terminal.

27. The method of claim 24, wherein in a case where the CU receives the measurement report from the terminal, the method further comprises:
sending, by the CU, the measurement report to the DU.

28. The method of claim 24, wherein scheduling the resources for the terminal based on the measurement report and/or the at least one mapping relationship comprises:
scheduling, by the DU, the resources for the terminal based on the measurement report and/or the at least one mapping relationship.

29. A communication apparatus, configured in a terminal, comprising:
a processing module, configured to determine at least one mapping relationship, wherein the mapping relationship comprises a mapping relationship between measurement information of application layer services of the terminal and indication indexes, map and convert at least one type of measurement information of a current application layer service of the terminal into corresponding indication indexes respectively based on the mapping relationship; and
a transceiver module, configured to report a measurement report to a base station, wherein the measurement report indicates the indication indexes corresponding respectively to the at least one type of measurement information.

30. A communication apparatus, configured in a network device, comprising:
a transceiver module, configured to send at least one mapping relationship to a terminal, wherein the mapping relationship comprises a mapping relationship between measurement information of application layer services of the terminal and indication indexes, and receive a measurement report from the terminal, wherein the measurement report indicates indication indexes corresponding respectively to at least one type of measurement information;
a processing module, configured to schedule resources for the terminal based on the measurement report and/or the at least one mapping relationship.

31. A communication apparatus, comprising a processor and a memory for storing a computer program, wherein when the computer program stored in the memory is executed by the processor, the apparatus is caused to implement the method of any one of claims 1 to 13, or to implement the method of any one of claims 14 to 28.

32. A computer-readable storage medium for storing instructions, wherein when the instructions are executed, the method of any one of claims 1 to 13 or the method of any one of claims 14 to 28 is implemented.
